# EUROPEAN PATENT APPLICATION

(11) **EP 3 145 105 A1**
(43) Date of publication of application: **22.03.2017**
(21) Application number: 14895249.2
(22) Date of filing: 17.06.2014
(51) Int. Cl.: H04L 1/18, H04L 1/16

(54) **RADIO RESOURCE SCHEDULING METHOD AND APPARATUS**

(71) Applicant: Huawei Technologies Co., Ltd., Longgang District Shenzhen, Guangdong 518129 (CN)
(72) Inventor: GAO, Hui, Shenzhen Guangdong 518129 (CN); ZHANG, Jinlin, Shenzhen Guangdong 518129 (CN)
(74) Representative: Maiwald Patentanwalts GmbH
(86) International application number: PCT/CN2014/080108
(87) International publication number: WO 2015/192322

(57) **Abstract**

The present invention relates to a radio resource scheduling method and apparatus. The method includes: when a sending end receives a negative acknowledgement NACK message fed back by a receiving end, acquiring, by the sending end, data whose response message is the negative acknowledgement message as data to be retransmitted, where the data to be retransmitted includes at least one transport block; and determining, by the sending end according to a radio link control RLC status report sent by the receiving end, whether the receiving end successfully receives each transport block of the data to be retransmitted, and if all the transport blocks of the data to be retransmitted are successfully received, canceling retransmission of the data to be retransmitted; or if not all the transport blocks of the data to be retransmitted are successfully received, retransmitting a transport block that is in the data to be retransmitted and is not successfully received. The present invention effectively solves a problem of repeated retransmission caused when an ACK is erroneously detected as a NACK, so that data that has been successively transmitted may be prevented from being retransmitted, thereby saving a bandwidth resource and improving utilization efficiency of a frequency spectrum.

## Description

### TECHNICAL FIELD

The present invention relates to the field of communications technologies, and in particular, to a radio resource scheduling method and apparatus.

### BACKGROUND

A radio protocol structure of an Evolved Universal Terrestrial Radio Access Network (Evolved Universal Terrestrial Radio Access Network, E-UTRAN) is divided into a user plane and a control plane. A user plane protocol stack includes the following sublayers: a physical layer (Physical Layer, PHY), media access control (Media Access Control, MAC), radio link control (Radio Link Control, RLC), and Packet Data Convergence Protocol (Packet Data Convergence Protocol, PDCP), and provides functions such as header compression, scheduling, automatic repeat request (Automatic Repeat Request, ARQ), and hybrid automatic repeat request (Hybrid Automatic Repeat Request, HARQ).

During data transmission, a data transport block is sent from a sending end to a receiving end by using the HARQ function, or the like. When receiving the data transport block correctly, the receiving end feeds back an acknowledgement (Acknowledgement, ACK) to the sending end. When receiving the data transport block erroneously, the receiving end feeds back a negative acknowledgement (Negative Acknowledgement, NACK) to the sending end. At this time, the sending end retransmits the data transport block by using the HARQ, and the receiving end receives the retransmitted data in a combined manner.

However, due to an impact of a channel environment, there is a probability that a false detection occurs in ACK/NACK transmission over the air interface between the sending end and the receiving end, that is, the sending end parses out a NACK while an ACK is sent actually. Particularly, in some modes in which multiple transport blocks are transmitted after being bundled and their feedback is sent together, an ACK is often erroneously detected as a NACK. For example, in feedback modes such as a downlink bundling (Bundling) or multiplexing (Multiplexing) feedback mode in Long Term Evolution Time Division Duplex (Long Term Evolution Time Division Duplex, LTE TDD), feedback of multiple downlink data transport blocks is transmitted after being bundled, and in this case, during ACK/NACK feedback, the feedback of the multiple downlink data transport blocks is first combined into one ACK or NACK feedback by means of operation, and then the ACK or NACK is fed back. When feedback of one downlink data transport block in multiple downlink data frames is a NACK, while feedback of other downlink data frames is ACKs, the NACK and ACKs are combined by means of operation to generate one NACK for feedback. However, actually, the other transport blocks in the multiple downlink data transport blocks are already transmitted successfully, but NACK feedback information is received by the sending end.

It may be seen that when a false detection occurs in ACK transmission over the air interface, that is, a NACK is fed back while an ACK is sent actually, a sending side retransmits data that has been successfully received actually, and a receiving side performs discarding processing after receiving the retransmitted data. As a result, retransmission of data that has been successfully transmitted leads to a waste of bandwidth resources, and a user cannot send new data in time, generating problems such as a decrease in a rate and an increase in a delay.

### SUMMARY

The present invention provides a radio resource scheduling method and apparatus, which effectively solve a problem of repeated retransmission caused when an ACK is erroneously detected as a NACK, so that data that has been successively transmitted may be prevented from being retransmitted, thereby saving a bandwidth resource and improving utilization efficiency of a frequency spectrum.

A first aspect of the present invention provides a radio resource scheduling method, where the method includes:
when a sending end receives a negative acknowledgement NACK message fed back by a receiving end, acquiring, by the sending end, data whose response message is the negative acknowledgement message as data to be retransmitted, where the data to be retransmitted includes at least one transport block;
determining, by the sending end according to a radio link control RLC status report sent by the receiving end, whether the receiving end successfully receives each transport block of the data to be retransmitted; and
if the receiving end successfully receives all the transport blocks of the data to be retransmitted, canceling retransmission of the data to be retransmitted; or if the receiving end does not successfully receive all the transport blocks of the data to be retransmitted, retransmitting a transport block that is in the data to be retransmitted and is not successfully received.

With reference to the first aspect, in a first possible implementation manner of the first aspect, the transport block includes at least one RLC protocol data unit RLC PDU, and the RLC status report includes acknowledgement information of an RLC PDU received by the receiving end; and
the determining whether the receiving end successfully receives each transport block of the data to be retransmitted specifically includes:
separately determining whether an RLC PDU in each transport block of the data to be retransmitted is successfully received, and if at least one RLC PDU in a transport block is successfully received, determining that the receiving end successfully receives the transport block of the data to be retransmitted; and if no RLC PDU in the transport block is successfully received, determining that the receiving end does not successfully receive the transport block in the data to be retransmitted.

With reference to the first aspect, in a second possible implementation manner of the first aspect, after the acquiring, by the sending end, data whose response message is the negative acknowledgement message as data to be retransmitted, the method further includes:
determining whether a retransmission time interval of the data to be retransmitted reaches a preset retransmission delay threshold; if the retransmission time interval of the data to be retransmitted reaches the preset retransmission delay threshold, the sending end directly retransmits all the transport blocks of the data to be retransmitted; if the retransmission time interval of the data to be retransmitted doesn't reach the preset retransmission delay threshold, the sending end determines, according to a radio link control RLC status report sent by the receiving end, whether the receiving end successfully receives the data to be retransmitted.

With reference to the first aspect, in a third possible implementation manner of the first aspect, if the sending end is a base station, the sending end triggers the receiving end to report the RLC status report to the sending end; or the receiving end regularly triggers reporting of the RLC status report to the sending end.

With reference to the third possible implementation manner of the first aspect, in a fourth possible implementation manner of the first aspect, before the receiving, by a sending end, a negative acknowledgement NACK message fed back by a receiving end, the method further includes:
setting, by the sending end, a polling identification, and when sending data to the receiving end, sending the polling identification to the receiving end, where the polling identification is used to trigger the receiving end to feed back an RLC status report.

With reference to the first aspect, in a fifth possible implementation manner of the first aspect, if the sending end is a terminal, the receiving end regularly triggers reporting of the RLC status report to the sending end.

According to a second aspect, the present invention further provides a radio resource scheduling apparatus, where the apparatus includes:
a receiving unit, configured to receive a response message and a radio link control RLC status report that are fed back by a receiving end;
an acquisition unit, configured to: when the receiving unit receives a negative acknowledgement NACK message, acquire data whose response message is the negative acknowledgement message as data to be retransmitted, where the data to be retransmitted includes at least one transport block;
a processing unit, configured to determine, according to the RLC status report received by the receiving unit, whether the receiving end successfully receives each transport block of the data to be retransmitted, and if the receiving end successfully receives all the transport blocks of the data to be retransmitted, cancel retransmission of the data to be retransmitted; or if the receiving end does not successfully receive all the transport blocks of the data to be retransmitted, enter a retransmission unit; and
the retransmission unit, configured to retransmit a transport block that is in the data to be retransmitted and is not successfully received.

With reference to the second aspect, in a first possible implementation manner of the second aspect, the transport block of the data to be retransmitted that is acquired by the acquisition unit includes at least one RLC protocol data unit RLC PDU, and the RLC status report received by the receiving unit includes acknowledgement information of an RLC PDU received by the receiving end; and
that the processing unit is configured to determine whether the receiving end successfully receives each transport block of the data to be retransmitted specifically includes: configured to separately determine whether an RLC PDU in each transport block of the data to be retransmitted in the RLC status report are successfully received, and if at least one RLC PDU in a transport block is successfully received, determine that the receiving end successfully receives the transport block of the data to be retransmitted; and if no RLC PDU in the transport block is successfully received, determine that the receiving end does not successfully receive the transport block in the data to be retransmitted.

With reference to the second aspect, in a second possible implementation manner of the second aspect, the apparatus further includes:
a determining unit, configured to determine whether a retransmission time interval of the data to be retransmitted that is acquired by the acquisition unit reaches a preset retransmission delay threshold; if the retransmission time interval of the data to be retransmitted reaches the preset retransmission delay threshold, the retransmission unit retransmits all the transport blocks of the data to be retransmitted; if the retransmission time interval of the data to be retransmitted doesn't reach the preset retransmission delay threshold, enter the processing unit.

With reference to the second aspect, in a third possible implementation manner of the second aspect, if the apparatus is a base station, the base station triggers the receiving end to report the RLC status report received by the receiving unit to the sending end; or the receiving end regularly triggers reporting of the RLC status report to the sending end.

With reference to the third possible implementation manner of the second aspect, in a fourth possible implementation manner of the second aspect, the apparatus further includes: a sending unit and a setting unit, where
the sending unit is configured to send data to the receiving end;
the setting unit is configured to set a polling identification; and
when sending the data to the receiving end, the sending unit sends the polling identification set by the setting unit to the receiving end, where the polling identification is used to trigger the receiving end to feed back a radio link control RLC status report.

With reference to the second aspect, in a fifth possible implementation manner of the second aspect, if the apparatus is a terminal, the receiving end regularly triggers reporting of the RLC status report received by the receiving unit to the sending end.

According to a third aspect, the present invention further provides a radio resource scheduling apparatus, where the apparatus includes: a processor and a receiver, where
the receiver is configured to receive a response message and a radio link control RLC status report that are fed back by a receiving end; and
the processor is configured to: when the receiver receives a negative acknowledgement NACK message, acquire data whose response message is the negative acknowledgement message as data to be retransmitted, where the data to be retransmitted includes at least one transport block;
determine, according to the RLC status report received by the receiver, whether the receiving end successfully receives each transport block of the data to be retransmitted, and if the receiving end successfully receives all the transport blocks of the data to be retransmitted, cancel retransmission of the data to be retransmitted; or if the receiving end does not successfully receive all the transport blocks of the data to be retransmitted, retransmit a transport block that is in the data to be retransmitted and is not successfully received.

With reference to the third aspect, in a first possible implementation manner of the third aspect, the transport block of the data to be retransmitted that is acquired by the processor includes at least one RLC protocol data unit RLC PDU, and the RLC status report received by the receiver includes acknowledgement information of an RLC PDU received by the receiving end; and
that the processor is configured to determine whether the receiving end successfully receives each transport block of the data to be retransmitted specifically includes: configured to separately determine whether an RLC PDU in each transport block of the data to be retransmitted in the RLC status report is successfully received, and if at least one RLC PDU in a transport block is successfully received, determine that the receiving end successfully receives the transport block of the data to be retransmitted; and if no RLC PDU in the transport block is successfully received, determine that the receiving end does not successfully receive the transport block in the data to be retransmitted.

With reference to the third aspect, in a second possible implementation manner of the third aspect, after acquiring the data whose response message is the negative acknowledgement message as the data to be retransmitted, the processor is further configured to determine whether a retransmission time interval of the data to be retransmitted reaches a preset retransmission delay threshold; if the retransmission time interval of the data to be retransmitted reaches the preset retransmission delay threshold, the processor directly retransmits all the transport blocks of the data to be retransmitted; if the retransmission time interval of the data to be retransmitted doesn't reach the preset retransmission delay threshold, the processor determines, according to a radio link control RLC status report sent by the receiving end, whether the receiving end successfully receives the data to be retransmitted.

With reference to the third aspect, in a third possible implementation manner of the third aspect, if the sending end is a base station, the sending end triggers the receiving end to report the RLC status report received by the receiver to the sending end; or the receiving end regularly triggers reporting of the RLC status report to the sending end.

With reference to the third possible implementation manner of the third aspect, in a fourth possible implementation manner of the third aspect, before the receiver receives the NACK fed back by the receiving end, the processor is further configured to set a polling identification, where the polling identification is used to trigger the receiving end to feed back an RLC status report;
the apparatus further includes: a sender, configured to send data to the receiving end; and
when sending the data to the receiving end by using the sender, the processor sends the polling identification to the receiving end by using the sender.

With reference to the third aspect, in a fifth possible implementation manner of the third aspect, if the sending end is a terminal, the receiving end regularly triggers reporting of the RLC status report received by the receiver to the sending end.

In the radio resource scheduling method and apparatus provided in the present invention, data to be retransmitted is jointly decided according to a response message and an RLC status report, so that a problem of repeated retransmission caused when an ACK is erroneously detected as a NACK can be effectively solved, and data that has been successively transmitted may be prevented from being retransmitted, thereby saving a bandwidth resource, and improving utilization efficiency of a frequency spectrum.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 a is a schematic diagram of a data frame of bundling feedback for LTE TDD uplink and downlink frames according to an embodiment of the present invention;
FIG. 1b is a schematic diagram of a data frame of Multiplexing feedback for LTE TDD uplink and downlink frames according to an embodiment of the present invention;
FIG. 2 is a network structural diagram of a communications system according to an embodiment of the present invention;
FIG. 3 is a flowchart of a radio resource scheduling method according to an embodiment of the present invention;
FIG. 4 is a flowchart of another radio resource scheduling method according to an embodiment of the present invention;
FIG. 5 is a schematic structural diagram of a radio resource scheduling apparatus according to an embodiment of the present invention;
FIG. 6 is a schematic structural diagram of another radio resource scheduling apparatus according to an embodiment of the present invention; and

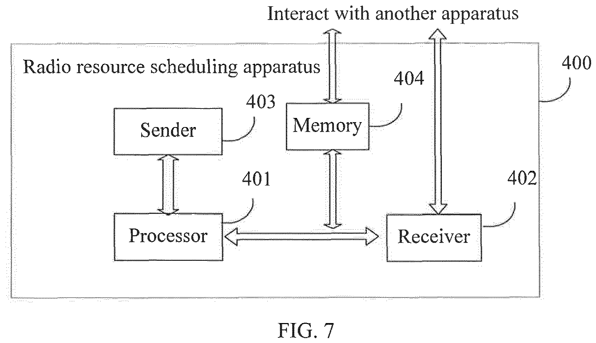

FIG. 7 is a schematic structural composition diagram of a radio resource scheduling apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

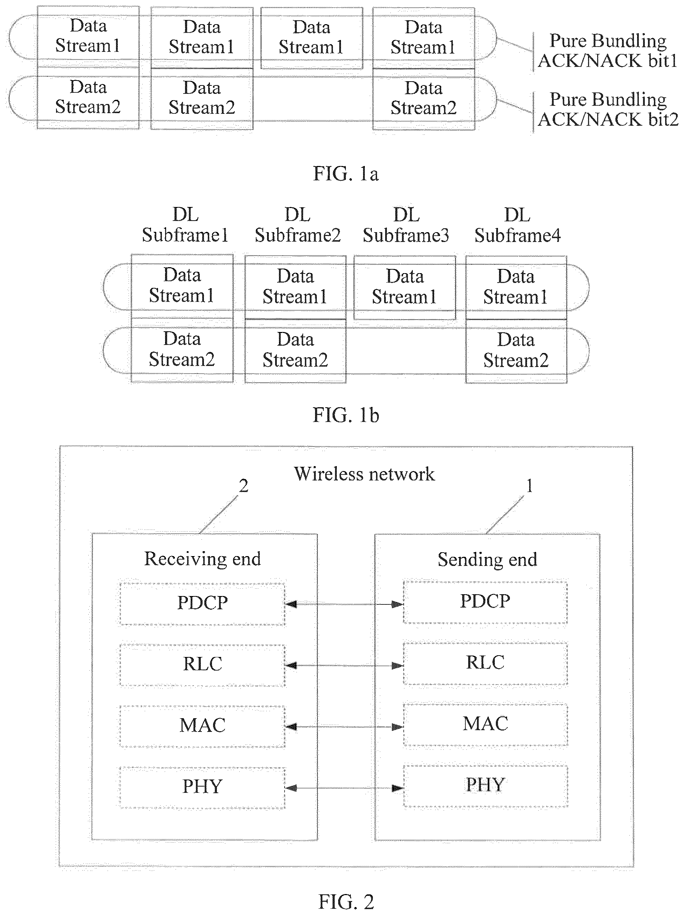

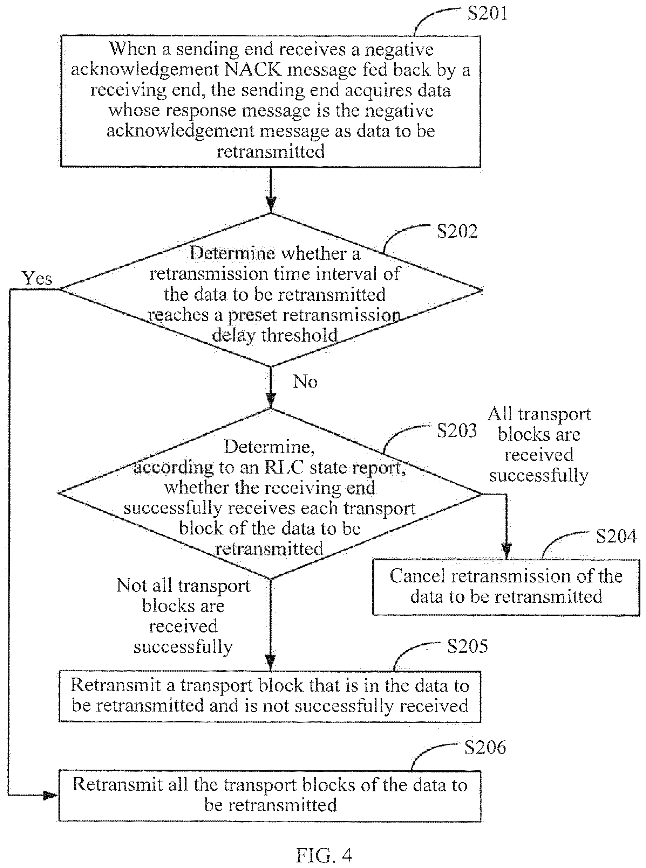

The radio resource scheduling method and apparatus provided in the embodiments of the present invention may be applied to a wireless mobile communications system, such as a long term evolution (Long Term Evolution, LTE) system, a wideband code division multiple access (Wideband Code Division Multiple Access, WCDMA) system, a time division-synchronous code division multiple access (Time Division-Synchronous Code Division Multiple Access, TD-SCDMA) system, a worldwide interoperability for microwave access (Worldwide Interoperability for Microwave Access, WIMAX) system, and the like. Particularly, in a communications system using a feedback mode in which multiple data transport blocks are transmitted after being bundled and their feedback is sent together, for example, an LTE TDD system using a downlink bundling (Bundling) or multiplexing (Multiplexing) feedback mode, in the TDD bundling feedback mode, ACK/NACK feedback of four transport blocks transmitted together is combined by using an AND operation, and then combined ACK/NACK feedback is transmitted. FIG. 1a is a bundling feedback manner in an LTE TDD uplink/downlink frame configuration mode 2. As shown in FIG. 1a, ACK/NACK feedback of four consecutive downlink transport blocks is bundled together and then fed back, where each transport block may include one protocol data unit PDU or multiple PDUs, and an AND operation is performed on ACK/NACK feedback of transport blocks having a same code word (that is, Data Stream 1 or Data Stream 2 in the figure) to generate one piece of ACK or NACK feedback, that is, one bundling feeds back only one ACK or NACK. If feedback of one transport block in the four transport blocks is a NACK, a result of the AND operation is a NACK, and the NACK is fed back. In the TDD Multiplexing feedback mode, ACK/NACK feedback of two code words transmitted together is bundled by using an AND operation, as shown in FIG. 1b, 4 subframes (DL Subframe 1 to DL Subframe 4) are formed, and ACK/NACK feedback of two code words (data steam 1 and data Stream 2) in each subframe is bundled.

Certainly, the present invention is also applicable to a communications system for transmitting a single transport block, for example, a communications system in which a feedback mode is delay scheduling in non ACK/NACK Bundling feedback (for example, an FDD mode). The ACK/NACK of a data transport block in an FDD mode is fed back separately. In the embodiments of the present invention, an LTE system is used as an example for description.

FIG. 2 is a network structural diagram of a communications system according to an embodiment of the present invention. As shown in FIG. 2, the system includes a sending end 1 and a receiving end 2. The sending end 1 may be a base station, or may be a terminal. Correspondingly, the receiving end 2 may be a terminal, or may be a base station. User plane protocol stacks of the sending end 1 and the receiving end 2 include: a PHY sublayer, a MAC sublayer, an RLC sublayer, and a PDCP sublayer, and the PHY, MAC, RLC, and PDCP sublayers of the sending end 1 communicate with the PHY, MAC, RLC, and PDCP sublayers of the receiving end 2 respectively. In this embodiment, an example in which the sending end is a base station eNB, and the receiving end is a terminal is used for description.

An RLC layer generally includes three types of RLC entities: a transparent mode (Transparent Mode, TM) RLC entity, an unacknowledged mode (Unacknowledged Mode, UM) RLC entity, and an acknowledged mode (Acknowledged Mode, AM) RLC entity. An AM RLC entity of the receiving end 2 feeds back, to an AM RLC entity of the sending end 1, acknowledgement information that is in a status report and about a received acknowledged mode data protocol data unit (Acknowledged Mode Data Protocol Data Unit, AMD PDU), so that the AM RLC entity of the sending end 1 performs corresponding processing according to the acknowledgement information, thereby ensuring that the sending is performed sequentially and the system runs normally. The acknowledgement information returned by the AM RLC entity of the receiving end 2 to the AM RLC entity of the sending end 1 may be acknowledgement information about one AMD PDU, or may be acknowledgement information about multiple AMD PDUs. By using this feature, in the present invention, a joint decision is performed by using the acknowledgement information returned by the receiving end 2 and a response signal from a MAC layer, to determine whether each PDU are successfully transmitted, so that data that has been successively transmitted is prevented from being retransmitted.

Main services and functions provided by the MAC layer include: multiplexing and demultiplexing of a MAC service data unit (MAC Service Data Unit, MAC SDU), reporting of scheduling information, HARQ error correction, priority processing, resource scheduling, and the like. A MAC transport block (MAC TB) may include one or more MAC SDUs (RLC PDUs), and is generally sent to the receiving end by using an HARQ. Data in a MAC SDU is the same as that in an RLC PDU. Data received by the RLC layer from an upper layer is an RLC SDU, and the RLC layer needs to add a header (Head) to data of the RLC SDU, encapsulate the RLC SDU into an RLC PDU, and send the RLC PDU to the MAC layer. From the perspective of the MAC layer, a MAC SDU is received, that is, the MAC SDU is equivalent to the RLC PDU. In terms of a transmission time, HARQ transmission is categorized into two types: synchronous transmission and asynchronous transmission, where in the asynchronous transmission, time for HARQ retransmission does not need to be specified. Generally, after receiving a NACK fed back by an HARQ, a sending side determines that data is to be retransmitted and a scheduling of the retransmission data is prioritized. Although asynchronous retransmission is used downlink, if scheduling for retransmission data is delayed for an excessively long time, an HARQ process cannot be vacated for new transmission, leading to an insufficient quantity of HARQ processes, thereby reducing a transmission rate for a user. In the present invention, data to be retransmitted is decided jointly with reference to an RLC status report, so that data that has been successively transmitted may be effectively prevented from being retransmitted, and a problem of repeated retransmission is solved, thereby saving a bandwidth resource, and improving utilization efficiency of a frequency spectrum.

### Embodiment 1

In a system in which a bundling feedback mode is used in an LTE TDD downlink, as shown in FIG. 1a, because uplink frames are limited, a UE with this configuration may have a maximum of 4 downlink transport blocks that serve as one bundling for ACK/NACK bundling feedback. If a transmission mode TM2, that is, single code word transmission, is configured, an AND operation is performed on ACK/NACK feedback of 4 transport blocks, to combine the ACK/NACK feedback into one ACK or NACK that is fed back to a base station. A transport block may include one or more RLC PDUs.

In the prior art, if response information of at least one transport block in one bundling is a NACK and needs to be fed back, even if other transport blocks are all transmitted correctly, all transport blocks of the bundling (that is, four Data Streams 1 or three Data Streams 2) need to be retransmitted, leading to a waste of air interface and hardware resources.

This embodiment of the present invention is provided to solve a problem of data retransmission at a MAC layer, and may be specifically executed by a MAC layer of a sending end. The MAC layer sends data to a MAC layer of a receiving end. The MAC layer of the sending end may receive an ACK/NACK response message fed back by the MAC layer of the receiving end, and may also receive an RLC status report fed back by an RLC layer of the receiving end to an RLC layer of the sending end, so as to jointly decide, according to the RLC status report and the ACK/NACK response message, whether retransmission is needed.

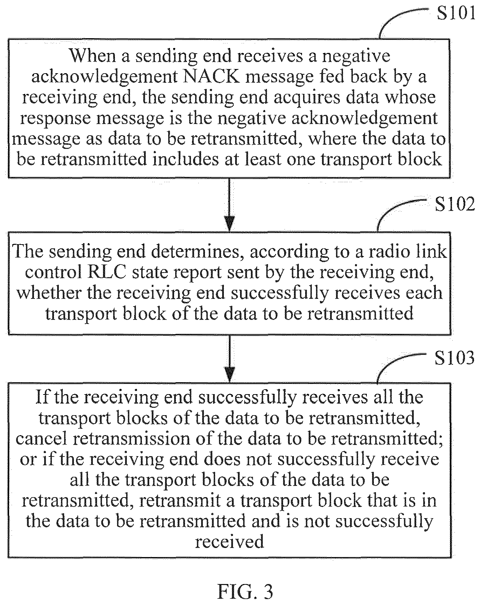

FIG. 3 is a flowchart of a radio resource scheduling method according to an embodiment of the present invention. As shown in FIG. 3, the radio resource scheduling method of this embodiment of the present invention includes:
S101: When a sending end receives a negative acknowledgement NACK message fed back by a receiving end, the sending end acquires data whose response message is the negative acknowledgement message as data to be retransmitted, where the data to be retransmitted includes at least one transport block.

The transport block includes at least one RLC PDU. It should be noted that, each sublayer of a user plane protocol stack separately transmits a corresponding PDU. For example, a PDCP layer transmits a PDCP PDU to an RLC layer; after receiving a PDCP SDU (that is, the PDCP PDU), the RLC layer encapsulates the PDCP SDU into an RLC PDU; the RLC layer then transmits the RLC PDU to a MAC layer; after receiving an MAC SDU (that is, the RLC PDU), the MAC layer encapsulates the MAC SDU into a MAC PDU, and so on. Data in the PDU transmitted at each layer is substantially the same, and the only difference lies in an encapsulation manner.

As shown in FIG. 1a, a bundling includes four Data Streams 1 or three Data Streams 2, a Data Stream is a transport block TB, and a TB may include one PDU or multiple PDUs. Because response messages (ACK/NACK) of four TBs are fed back together in the bundling feedback mode, if a response message of one TB is NACK, the receiving end feeds back a NACK to the sending end when receiving the bundling.

When receiving the NACK, the sending end acquires data whose response message is the NACK as data to be retransmitted, that is, all transport blocks in the bundling whose response message is NACK are acquired.

S102: The sending end determines, according to a radio link control RLC status report sent by the receiving end, whether the receiving end successfully receives each transport block of the data to be retransmitted.

S103: If the receiving end successfully receives all the transport blocks of the data to be retransmitted, cancel retransmission of the data to be retransmitted; or if the receiving end does not successfully receive all the transport blocks of the data to be retransmitted, retransmit a transport block that is in the data to be retransmitted and is not successfully received.

The RLC status report includes acknowledgement information of an RLC PDU received by the receiving end, and the acknowledgement information may include a sequence number of an RLC PDU successfully received by the receiving end.

The determining whether the receiving end successfully receives each transport block of the data to be retransmitted in step 102 specifically includes:
separately determining whether an RLC PDU in each transport block of the data to be retransmitted is successfully received, and if at least one RLC PDU in a transport block is successfully received, determining that the receiving end successfully receives the transport block of the data to be retransmitted; and if no RLC PDU in the transport block is successfully received, determining that the receiving end does not successfully receive the transport block of the data to be retransmitted. That is, if a PDU is successfully received, it is considered that the TB is successfully received. The determining needs to be performed on all the transport blocks in the data to be retransmitted.

When a new transport block (TB) is generated, the sending end records a sequence number of an RLC PDU included in the TB, and associates the TB at the MAC layer with the sequence number of the RLC PDU. If the received data whose response message sent by the receiving end is the NACK includes the TB, in step 101, all the data, including this TB, whose response messages are NACKs is acquired as the data to be retransmitted. When the RLC status report fed back by the receiving end is received, it is separately determined, according to the RLC status report, whether sequence numbers of the RLC PDUs in the TBs of the data to be retransmitted, including this TB, are successfully received, and if a sequence number of at least one RLC PDU in one TB is successfully received, it indicates that the receiving end successfully receives the TB; or if none of sequence numbers of the RLC PDUs in the transport block is successfully received, it indicates that the TB is a transport block that is not successfully received by the receiving end. The determining is separately performed on each TB in the data to be retransmitted, and the same processing is performed on other TBs in the data to be retransmitted.

Optionally, the RLC status report may include a segment of sequence numbers of RLC PDUs successfully received by the receiving end, and during the determining, if a sequence number of an RLC PDU belongs to the segment of sequence numbers of the successfully received RLC PDUs, it indicates that the RLC PDU is successfully received; otherwise, it indicates that the RLC PDU is not successfully received.

If it is determined in S102 that all the transport blocks in the data to be retransmitted are successfully received by the receiving end, the retransmission of the data to be retransmitted is canceled after S103 is entered. If it is determined in S102 that some transport blocks in the data to be retransmitted are not successfully received by the receiving end, the transport blocks that are not successfully received by the receiving end in the data to be retransmitted are retransmitted afterS103 is entered.

It should be noted that, reporting of the RLC status report may be triggered by the sending end or regularly triggered by the receiving end.

Specifically, if the sending end is a base station, the sending end triggers the receiving end to report the RLC status report to the sending end; or the receiving end regularly triggers reporting of the RLC status report to the sending end. If the sending end is a terminal device, reporting of the RLC status report to the sending end is triggered regularly by the receiving end.

In a case in which the sending end is the base station and reporting of the RLC status report is triggered by the sending end, at the sending end, for example, at the base station, a polling identification (polling) may be set, where the polling identification is used to trigger the receiving end to feed back a radio link control RLC status report, and by setting of the polling identification, the receiving end actively feeds back the RLC status report immediately. When sending data to the receiving end, the sending end sends the polling identification to the receiving end, to actively trigger a receiving side to feed back the RLC status report.

Generally, in the foregoing case in which the sending end triggers reporting, when the sending end transmits data, a polling identification may be set in each RLC PDU of one TB or several TBs in a bundling, to trigger the receiving end to feed back the RLC status report. In order that the RLC status report can be reported to a sending side, when the sending end is a base station side, uplink scheduling needs to be performed, to allocate a given bandwidth resource for reporting the RLC status report to the sending side. In addition, frequency at which reporting is triggered may be adjusted according to utilization of an air interface resource, thereby balancing usage of the air interface resource by the RLC status report.

In a case in which the receiving end regularly triggers reporting of the RLC status report to the sending end, parameter configuration may be performed by using a base station (which may be the sending end, or may be the receiving end) first, to configure a time interval for triggering a timer of the receiving end.

In addition, during data transmission, congestion or other exceptions may occur, and a delay may occur when the sending end receives the RLC status report; to avoid an excessive delay because retransmission delay exceeds a given period of time due to receiving of the RLC status report, or the like, a retransmission delay threshold is set generally.

Therefore, optionally, as shown in FIG. 4, after the data to be retransmitted is acquired in S201, the method further includes: S202: determine whether a retransmission time interval of the data to be retransmitted reaches a preset retransmission delay threshold; if the retransmission time interval of the data to be retransmitted reaches the preset retransmission delay threshold, go to S206, the sending end directly retransmits all the transport blocks of the data to be retransmitted; if the retransmission time interval of the data to be retransmitted doesn't reach the preset retransmission delay threshold, go to S203, the sending end determines, according to a radio link control RLC status report sent by the receiving end, whether the receiving end successfully receives each transport block of the data to be retransmitted, and if the receiving end successfully receives all the transport blocks of the data to be retransmitted, go to S204 to cancel retransmission of the data to be retransmitted; or if the receiving end does not successfully receive all the transport blocks of the data to be retransmitted, go to S205 to retransmit a transport block that is in the data to be retransmitted and is not successfully received.

The preset retransmission delay threshold may be adjusted according to different actual usage scenarios. A minimum value of the value may be set to one HARQ RTT (a minimum HARQ transmission interval, that is, 1 HARQ RTT). The value cannot be excessively large; otherwise, an excessive delay is caused. Generally, a maximum value may be set to twice the HARQ RTT (2HARQ RTT). The preset retransmitting delay threshold may be any value ranging from 1HARQ RTT to 2HARQ RTT.

In the radio resource scheduling method provided in this embodiment of the present invention, data to be retransmitted is jointly decided according to a response message and an RLC status report, so that a problem of repeated retransmission caused when an ACK is erroneously detected as a NACK may be effectively solved, and data that has been successively transmitted may be prevented from being retransmitted, thereby saving a bandwidth resource, and improving utilization efficiency of a frequency spectrum.

The radio resource scheduling method provided in this embodiment of the present invention is described in detail above, and a radio resource scheduling apparatus provided in an embodiment of the present invention is described in detail below.

### Embodiment 2

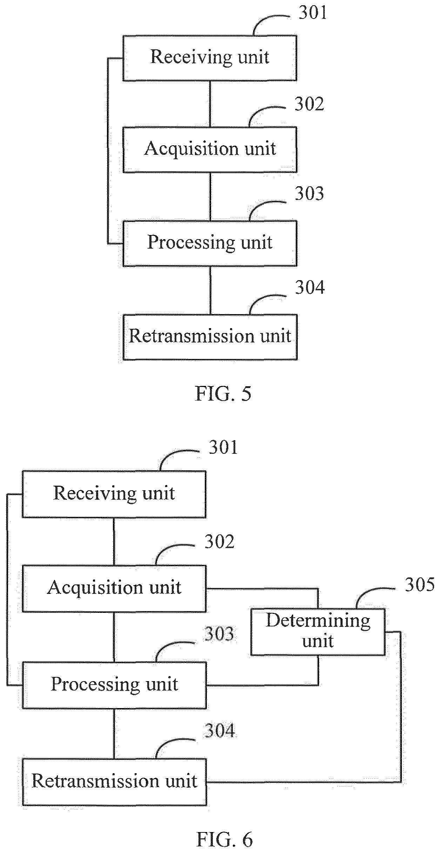

FIG. 5 is a schematic structural diagram of a radio resource scheduling apparatus according to an embodiment of the present invention. As shown in FIG. 5, the radio resource scheduling apparatus in this embodiment of the present invention includes: a receiving unit 301, an acquisition unit 302, a processing unit 303, and a retransmission unit 304.

The receiving unit 301 is configured to receive a response message and a radio link control RLC status report that are fed back by a receiving end.

The acquisition unit 302 is configured to: when the receiving unit 301 receives a negative acknowledgement NACK message, acquire data whose response message is the negative acknowledgement message as data to be retransmitted.

The data to be retransmitted includes at least one transport block.

The processing unit 303 is configured to determine, according to the RLC status report received by the receiving unit 301, whether the receiving end successfully receives each transport block of the data to be retransmitted, and if the receiving end successfully receives all the transport blocks of the data to be retransmitted, cancel retransmission of the data to be retransmitted; or if the receiving end does not successfully receive all the transport blocks of the data to be retransmitted, enter the retransmission unit 304.

The retransmission unit 304 is configured to retransmit a transport block that is in the data to be retransmitted and is not successfully received.

The transport block of the data to be retransmitted that is acquired by the acquisition unit 302 includes at least one RLC PDU.

The RLC status report received by the receiving unit 301 includes acknowledgement information of an RLC PDU received by the receiving end, and the acknowledgement information may include a sequence number of an RLC PDU successfully received by the receiving end.

The processing unit 303 is configured to determine whether the receiving end successfully receives each transport block of the data to be retransmitted, which specifically includes: configured to separately determine whether an RLC PDU in each transport block of the data to be retransmitted in the RLC status report are successfully received, and if at least one RLC PDU in a transport block is successfully received, determine that the receiving end successfully receives the transport block of the data to be retransmitted; and if no RLC PDU in the transport block is successfully received, determine that the receiving end does not successfully receive the transport block in the data to be retransmitted.

It should be noted that, reporting of the RLC status report may be triggered by the sending end or regularly triggered by the receiving end.

Specifically, if the apparatus is a base station, the base station triggers the receiving end to report the RLC status report received by the receiving unit 301 to the sending end; or reporting of the RLC status report received by the receiving unit 301 to the sending end is regularly triggered by the receiving end. If the apparatus is a terminal, reporting of the RLC status report received by the receiving unit 301 to the sending end is triggered by the receiving end.

In a case in which the apparatus is the base station, the apparatus may further include: a sending unit 306 and a setting unit 307.

The sending unit 306 is configured to send data to the receiving end.

The setting unit 307 is configured to set a polling identification, where the polling identification is used to trigger the receiving end to feed back a radio link control RLC status report.

When sending the data to the receiving end, the sending unit 306 sends the polling identification set by the setting unit 307 to the receiving end.

Generally, in the foregoing case in which reporting is triggered by the sending end, the setting unit 307 may set a polling identification in each RLC PDU of one TB or several TBs in a bundling, and the sending unit 306 sends the polling identification to the receiving end, to trigger the receiving end to feed back the RLC status report.

In a case in which the receiving end regularly triggers reporting of the RLC status report to the sending end, parameter configuration may be performed by using a base station (which may be the sending end, or may be the receiving end) first, to configure a time interval for triggering a timer of the receiving end.

In addition, during data transmission, congestion or other exceptions may occur, and a delay may occur when the sending end receives the RLC status report; to avoid an excessive delay caused by that retransmission exceeds a given period of time due to a delay in receiving of the RLC status report, or the like, a retransmission delay threshold is set generally.

Optionally, as shown in FIG. 6, the apparatus further includes: a determining unit 305. The determining unit 305 is configured to determine whether a retransmission time interval of the data to be retransmitted that is acquired by the acquisition unit 302 reaches a preset retransmission delay threshold; if the retransmission time interval of the data to be retransmitted reaches the preset retransmission delay threshold, the retransmission unit 304 retransmits all the transport blocks of the data to be retransmitted; if the retransmission time interval of the data to be retransmitted doesn't reach the preset retransmission delay threshold, the processing unit 303 determines, according to a radio link control RLC status report sent by the receiving end, whether the receiving end successfully receives each transport block of the data to be retransmitted. If the receiving end successfully receives all the transport blocks of the data to be retransmitted, retransmission of the data to be retransmitted is canceled; or if the receiving end does not successfully receive all the transport blocks of the data to be retransmitted, the retransmission unit 304 retransmits the transport block that is in the data to be retransmitted and is not successfully received.

The preset retransmission delay threshold may be adjusted according to different actual usage scenarios. A minimum value may be set to one HARQ RTT (a minimum HARQ transmission interval, that is, 1 HARQ RTT). The value cannot be excessively large; otherwise, an excessive delay is caused. Generally, a maximum value may be set to twice the HARQ RTT (2HARQ RTT). The preset retransmitting delay threshold may be any value ranging from 1 HARQ RTT to 2HARQ RTT.

### Embodiment 3

FIG. 6 is a schematic structural composition diagram of a radio resource scheduling apparatus according to an embodiment of the present invention. As shown in FIG. 6, the radio resource scheduling apparatus 400 includes: a processor 401, a receiver 402, a sender 403, and a memory 404.

The receiver 402 is configured to interact with another apparatus, and receive data, including a response message and an RLC status report, sent by the another apparatus.

The sender 403 is configured to interact with another apparatus, and send data to the another apparatus.

The memory 404 may be a permanent memory, for example, a hard disk drive and a flash memory, and the memory 404 has a software module and a device driver. The software module can execute various function of the foregoing method in the embodiment of the present invention; and the device driver may be a network and an interface driver.

When being started, these software components are loaded into the memory 404, and then are accessed by the processor 401 and execute the following instructions:
when the receiver 402 receives a negative acknowledgement NACK message fed back by a receiving end, acquiring data whose response message is the negative acknowledgement message as data to be retransmitted, where the data to be retransmitted includes at least one transport block;
determining, according to an RLC status report sent by the receiving end and received by the receiver 402, whether the receiving end successfully receives each transport block of the data to be retransmitted; and
if the receiving end successfully receives all the transport blocks of the data to be retransmitted, canceling retransmission of the data to be retransmitted; or if the receiving end does not successfully receive all the transport blocks of the data to be retransmitted, retransmitting a transport block that is in the data to be retransmitted and is not successfully received.

The transport block includes at least one RLC PDU, and the RLC status report includes acknowledgement information, which is received by the receiving end, of the RLC PDU. The processor 401 is specifically configured to separately determine whether an RLC PDU in each transport block of the data to be retransmitted is successfully received, and if at least one RLC PDU in a transport block is successfully received, determine that the receiving end successfully receives the transport block of the data to be retransmitted; and if no RLC PDU in the transport block is successfully received, determine that the receiving end does not successfully receive the transport block in the data to be retransmitted.

Specifically, the radio resource scheduling apparatus further executes, according to the foregoing instructions, the method described in the foregoing Embodiment 1, and details are not described herein again.

In the radio resource scheduling method and apparatus provided in the embodiments of the present invention, data to be retransmitted is jointly decided according to a response message and an RLC status report, so that a problem of repeated retransmission caused when an ACK is erroneously detected as a NACK can be effectively solved, and data that has been successively transmitted may be prevented from being retransmitted, thereby saving a bandwidth resource, and improving utilization efficiency of a frequency spectrum.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A radio resource scheduling method, wherein the method comprises:
when a sending end receives a negative acknowledgement (NACK) message fed back by a receiving end, acquiring, by the sending end, data whose response message is the negative acknowledgement message as data to be retransmitted, wherein the data to be retransmitted comprises at least one transport block;
determining, by the sending end according to a radio link control (RLC) status report sent by the receiving end, whether the receiving end successfully receives each transport block of the data to be retransmitted; and
if the receiving end successfully receives all the transport blocks of the data to be retransmitted, canceling retransmission of the data to be retransmitted; or if the receiving end does not successfully receive all the transport blocks of the data to be retransmitted, retransmitting a transport block that is in the data to be retransmitted and is not successfully received.

2. The method according to claim 1, wherein the transport block comprises at least one RLC protocol data unit RLC PDU, and the RLC status report comprises acknowledgement information of an RLC PDU that is received by the receiving end; and
the determining whether the receiving end successfully receives each transport block of the data to be retransmitted specifically comprises:
separately determining whether an RLC PDU in each transport block of the data to be retransmitted is successfully received, and if at least one RLC PDU in a transport block is successfully received, determining that the receiving end successfully receives the transport block of the data to be retransmitted; and if no RLC PDU in the transport block is successfully received, determining that the receiving end does not successfully receive the transport block in the data to be retransmitted.

3. The method according to claim 1, after the acquiring, by the sending end, data whose response message is the negative acknowledgement message as data to be retransmitted, further comprising:
determining whether a retransmission time interval of the data to be retransmitted reaches a preset retransmission delay threshold; if the retransmission time interval of the data to be retransmitted reaches the preset retransmission delay threshold, the sending end directly retransmits all the transport blocks of the data to be retransmitted; if the retransmission time interval of the data to be retransmitted doesn't reach the preset retransmission delay threshold, the sending end determines, according to a radio link control RLC status report sent by the receiving end, whether the receiving end successfully receives the data to be retransmitted.

4. The method according to claim 1, wherein if the sending end is a base station, the sending end triggers the receiving end to report the RLC status report to the sending end; or the receiving end regularly triggers reporting of the RLC status report to the sending end.

5. The method according to claim 4, before the receiving, by a sending end, a negative acknowledgement NACK message fed back by a receiving end, further comprising:
setting, by the sending end, a polling identification, and when sending data to the receiving end, sending the polling identification to the receiving end, wherein the polling identification is used to trigger the receiving end to feed back an RLC status report.

6. The method according to claim 1, wherein if the sending end is a terminal, the receiving end regularly triggers reporting of the RLC status report to the sending end.

7. A radio resource scheduling apparatus, wherein the apparatus comprises:
a receiving unit, configured to receive a response message and a radio link control RLC status report that are fed back by a receiving end;
an acquisition unit, configured to: when the receiving unit receives a negative acknowledgement NACK message, acquire data whose response message is the negative acknowledgement message as data to be retransmitted, wherein the data to be retransmitted comprises at least one transport block;
a processing unit, configured to determine, according to the RLC status report received by the receiving unit, whether the receiving end successfully receives each transport block of the data to be retransmitted, and if the receiving end successfully receives all the transport blocks of the data to be retransmitted, cancel retransmission of the data to be retransmitted; or if the receiving end does not successfully receive all the transport blocks of the data to be retransmitted, enter a retransmission unit; and
the retransmission unit, configured to retransmit a transport block that is in the data to be retransmitted and is not successfully received.

8. The apparatus according to claim 7, wherein the transport block of the data to be retransmitted that is acquired by the acquisition unit comprises at least one RLC protocol data unit RLC PDU, and the RLC status report received by the receiving unit comprises acknowledgement information of an RLC PDU that is received by the receiving end; and
that the processing unit is configured to determine whether the receiving end successfully receives each transport block of the data to be retransmitted specifically comprises: configured to separately determine whether an RLC PDU in each transport block of the data to be retransmitted in the RLC status report is successfully received, and if at least one RLC PDU in a transport block is successfully received, determine that the receiving end successfully receives the transport block of the data to be retransmitted; and if no RLC PDU in the transport block is successfully received, determine that the receiving end does not successfully receive the transport block in the data to be retransmitted.

9. The apparatus according to claim 7, wherein the apparatus further comprises:
a determining unit, configured to determine whether a retransmission time interval of the data to be retransmitted that is acquired by the acquisition unit reaches a preset retransmission delay threshold; if the retransmission time interval of the data to be retransmitted reaches the preset retransmission delay threshold, the retransmission unit retransmits all the transport blocks of the data to be retransmitted; if the retransmission time interval of the data to be retransmitted doesn't reach the preset retransmission delay threshold, enter the processing unit.

10. The apparatus according to claim 7, wherein if the apparatus is a base station, the base station triggers the receiving end to report the RLC status report received by the receiving unit to the sending end; or the receiving end regularly triggers reporting of the RLC status report to the sending end.

11. The apparatus according to claim 10, wherein the apparatus further comprises: a sending unit and a setting unit, wherein
the sending unit is configured to send data to the receiving end;
the setting unit is configured to set a polling identification; and
when sending the data to the receiving end, the sending unit sends the polling identification set by the setting unit to the receiving end, wherein the polling identification is used to trigger the receiving end to feed back a radio link control RLC status report.

12. The apparatus according to claim 7, wherein if the apparatus is a terminal, the receiving end regularly triggers reporting of the RLC status report received by the receiving unit to the sending end.
